**Europäisches Patentamt**

(19) **European Patent Office**

**Office européen des brevets**

(11) Veröffentlichungsnummer : **0 426 814 B1**

(12) # EUROPÄISCHE PATENTSCHRIFT

(45) Veröffentlichungstag der Patentschrift :
04.11.92 Patentblatt 92/45

(51) Int. Cl.$^5$ : **G01P 9/04**

(21) Anmeldenummer : **90908186.1**

(22) Anmeldetag : **30.05.90**

(86) Internationale Anmeldenummer :
**PCT/DE90/00399**

(87) Internationale Veröffentlichungsnummer :
**WO 90/15335 13.12.90 Gazette 90/28**

(54) **SENSOR ZUR BESTIMMUNG DER WINKELGESCHWINDIGKEIT.**

(30) Priorität : **01.06.89 DE 3917832**

(43) Veröffentlichungstag der Anmeldung :
**15.05.91 Patentblatt 91/20**

(45) Bekanntmachung des Hinweises auf die
Patenterteilung :
**04.11.92 Patentblatt 92/45**

(84) Benannte Vertragsstaaten :
**DE FR GB IT SE**

(56) Entgegenhaltungen :
**EP-A- 0 145 534**

(56) Entgegenhaltungen :
**US-A- 4 516 427**
**Journal of the Acoustical Society of America,**
**vol. 80, no. 2, August 1986, New York, US,**
**pages 672-680; Bruneau, Garing,Leblond: "A**
**rate gyro based on acoustic mode coupling"**

(73) Patentinhaber : **ROBERT BOSCH GMBH**
**Postfach 30 02 20**
**W-7000 Stuttgart 30 (DE)**

(72) Erfinder : **HAMISCH, Hansjoachim**
**Stendelweg 49**
**W-1000 Berlin 19 (DE)**
Erfinder : **BORUSCHEWITZ, Manfred**
**Mühlenhoffstr. 6**
**W-1000 Berlin 61 (DE)**

EP 0 426 814 B1

Jouve, 18, rue Saint-Denis, 75001 PARIS

## Beschreibung

### Stand der Technik

Die Erfindung geht aus von einem Sensor zur Bestimmung der Winkelgeschwindigkeit, der nach Art eines Schwingungsgyrometers im Ultraschallbereich arbeitet. Bekannte Schwingungsgyrometer mit demselben Anwendungsbereich arbeiten im allgemeinen mit niederfrequenten Biegeschwingungen, die infolge der bei Rotation auftretenden Corioliskräfte eine zur primären Schwingung senkrechte Resonanzschwingung erzeugen und damit ein Maß für die Winkelgeschwindigkeit liefern. Es sind aber auch Schwingungsgyrometer vorgeschlagen worden, die von einer Dickenscherschwingung ausgehen. In diesem Falle ist die Eigenfrequenz der Schwinger bereits wesentlich höher (> 100 kHz). Außerdem wird bewußt im Interesse einer geringen Temperaturabhängigkeit des Signals auf die Anregung einer Resonanzschwingung durch die Corioliskräfte verzichtet. Die Corioliskräfte bewirken hier eine erzwungene longitudinale Dickenschwingung.

In der vorliegenden Erfindung wird jedoch ein anderes Meßprinzip benutzt: die Auswirkung der Corioliskräfte auf eine Ultraschallwelle in einem rotierenden Medium. Dabei entsteht keine neue Schwingungsform. Als Meßgröße dient die Ablenkung der Ultraschallwelle im rotierenden Medium, die der Winkelgeschwindigkeit proportional ist.

Auch beim Sensor nach der EP-A-01 45 534 wird der Einfluß der Corioliskräfte auf die Eigenschwingungen eines Resonators ausgenutzt. Beim hier beschriebenen Sensor wird mit einer stehenden Schallwelle mit nur einem Schwingungsknoten im Resonator gearbeitet. In der Mitte der Seitenwände des Resonanzraums werden im Bereich des Schwingungsknotens der Schallwelle die periodischen Druckschwankungen gemessen. Diese Druckschwankungen ergeben sich als Folge der durch die Rotation des Resonators entstehenden Corioliskräfte. Die entstehenden Corioliskräfte erzeugen zur bestehenden Schallwelle eine sekundäre Resonanzschwingung gleicher Frequenz und mit Druckbäuchen an den Seitenwänden, die von dort angeordneten Empfängern erfaßt werden.

In der US-A-4 516 427 wird ein mit im akustischen Bereich liegenden Wellen arbeitender Sensor beschrieben. Hier wird von einem Sender Strahlung in einen Quarzkristall abgegeben, der an seiner Außenwand mehrere Facetten zur Reflexion der Strahlen aufweist. Der Strahl wird an mehreren Facetten reflektiert, bis er am Empfänger auftrifft. Der Empfänger detektiert eine Abweichung des Strahlenzentrums und überträgt diese Abweichung in eine Dreh- oder Geschwindigkeitsinformation. Der Sensor arbeitet aber relativ aufwendig und kompliziert.

### Vorteile der Erfindung

Der erfindungsgemäße Sensor zur Bestimmung der Winkelgeschwindigkeit mit den merkmalen des Anspruchs 1 hat gegenüber den bekannten Schwingungsgyrometern den Vorteil, daß er geringe Erschütterungs- und Temperaturempfindlichkeit aufweist. Er hat einen einfachen, mechanisch stabilen Aufbau. Die Verwendung einer hohen Frequenz er möglicht eine Unterdrückung von niederfrequenten Störsignalen, die andernfalls durch Erschütterungen oder Schwingungen des im Kraftfahrzeug eingebauten Schalleiters bewirkt werden. Da es keinen Übergang zu einer anderen Schwingungsform gibt, werden bei der Bildung des Meßsignals die gleichen piezokeramischen Scherschwinger wie beim Sender verwendet. Dadurch kann die Amplitudenregelung der Ultraschallwelle so gestaltet werden, daß der größte Anteil des Temperaturfehlers des Sensors, bedingt durch die Temperaturabhängigkeit des piezoelektrischen Koeffizienten $d_{15}$, kompensiert wird. Außerdem kommt für die Signalbildung der größte piezoelektrische Koeffizient $d_{15}$ zur Anwendung, der etwa dreimal größer ist als der meistens genutzte Koeffizient $d_{31}$. Die weite räumliche Trennung von Sender- und Signalbereich erleichtert die Unterdrückung des Störeinflusses der Anregungsspannung auf das Meßsignal.

Für den Aufbau des Sensors ist es besonders vorteilhaft, die Schallfrequenz so hoch wie von der Schallabsorption her möglich zu wählen, um eine gute Bündelung des Schallstrahls zu erreichen. Dabei sollte die Schallabsorption so hoch sein, daß in ausreichender Näherung von einer laufenden Schallwelle gesprochen werden kann. Durch die Verwendung einer Zylinderwelle an Stelle einer ebenen Welle läßt sich die Bündelung und damit die Empfindlichkeit noch verbessern. Die Schallgeschwindigkeit sollte für eine hohe Empfindlichkeit so klein wie möglich sein, was im wesentlichen durch die Verwendung einer transversalen Schallwelle erreicht wird. Als Material für den Schalleiter ist Zerodur optimal geeignet.

Durch die in den abhängigen Ansprüchen aufgeführten Maßnahmen sind vorteilhafte Weiterbildungen des im Anspruch 1 angegebenen Sensors möglich.

### Zeichnung

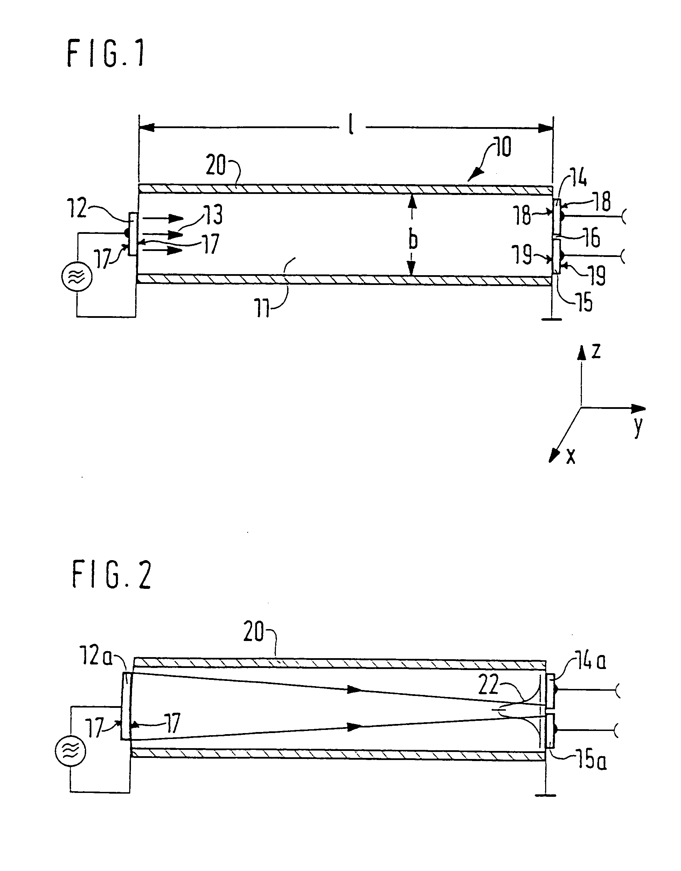

Ausführungsbeispiele der Erfindung sind in der Zeichnung dargestellt und in der nachfolgenden Beschreibung näher erläutert. Es zeigen die Figuren 1 und 2 je einen Längsschnitt durch ein Ausführungsbeispiel des Sensors.

### Beschreibung der Ausführungsbeispiele

In der Figur 1 ist mit 10 ein Sensor zur Bestim-

mung der Winkelgeschwindigkeit $\Omega$ eines rotierenden Systems bezeichnet, der einen Schalleiter 11 mit der Länge 1, der Breite b und der nicht gezeichneten Dicke d aufweist. An der einen Stirnseite des Schalleiters 11 ist ein Sender 12, insbesondere ein piezokeramischer Schwerschwinger, angeordnet, mit dessen Hilfe eine Ultraschallwelle 13 in den Schalleiter 11 eingestrahlt wird. Auf der anderen Stirnseite des Schalleiters 11 befinden sich zwei Empfänger 14, 15, zwischen denen ein parallel zur x-Richtung verlaufender Spalt 16 liegt. Die angegebenen Richtungen sind auf das in der Zeichnung eingetragene Achsenkreuz bezogen, wobei die x-Richtung senkrecht zur Zeichenebene verläuft und die Zeichenebene die yz-Ebene darstellt. Der Vektor der zu bestimmenden Winkelgeschwindigkeit $\Omega$ ist senkrecht zur yz-Ebene, das heißt also parallel zur x-Richtung gerichtet, so daß eine Strahlablenkung in der yz-Ebene bewirkt wird.

Die Anregungsmöglichkeit des als Sender dienenden piezokeramischen Scherschwingers 12 ergibt sich aus den piezokeramischen Eigenschaften des verwendeten Scherschwingers, das heißt der verwendeten Keramikplatte, in der durch ein elektrisches Wechselfeld $E_y$ entsprechend der Gleichung $y_z = d_{15} E_y$ periodische Scherschwingungen $y_z$ der keramischen Platte erzeugt werden. Die Proportionalitätsfaktoren $d_{15}$ sowie $d_{31}$, ... in den Beziehungen zwischen elektrischen und mechanischen Größen werden als piezoelektrische Koeffizienten bezeichnet. Die zur z-Richtung parallele polare Achse der piezokeramischen Platte liegt in der Plattenebene. Die Plattendicke ergibt sich aus der gewünschten Ultraschallfrequenz. Über die y-Elektroden 17 wird der Scherschwinger 12 zu Scherschwingungen in Resonanz angeregt, die im angekoppelten Schalleiter 11 eine Transversalwelle erzeugen. In bekannter Weise ist die Lage der Elektrodenebene durch ihre normale Richtung ausgedrückt.

Die Empfänger 14, 15 sind ebenfalls piezokeramische Scherschwinger, die durch die eintreffende transversale Ultraschallwelle ebenfalls in Resonanz zu Scherschwingungen angeregt werden. Dadurch werden auf den y-Elektroden 18, 19 der Empfänger 14, 15 infolge des direkten Piezoeffektes periodisch Ladungen erzeugt.

Die Messung der Winkelgeschwindigkeit $\Omega$ beruht auf der Corioliskraft $\vec{K}_c$, die eine in einem rotierenden System mit der Geschwindigkeit v bewegte Masse m erfährt,

$$\vec{K}_c = 2m \cdot \vec{v} \times \vec{\Omega}.$$

Als bewegte Massen m werden hier die schwingenden Massenelemente des Mediums betrachtet, $\vec{v}$ ist die Geschwindigkeit, mit der die Massenelemente um ihre Ruhelage schwingen. Der Betrag der Corioliskraft $K_c$ ist dem Betrag der Winkelgeschwindigkeit $\Omega$ proportional, ihre durch das Vektorprodukt

$$\vec{v} \times \vec{\Omega}$$

bestimmte Richtung wechselt mit dem Drehsinn der Winkelgeschwindigkeit $\Omega$ das Vorzeichen. Die Entfernung zur Drehachse spielt dabei keine Rolle.

Dem Auswertesystem des Sensors liegen folgende Überlegungen zugrunde: Die im rotierenden System, das heißt bei Angriff einer Winkelgeschwindigkeit $\Omega$ auf bewegte Massenelemente m wirkenden Corioliskräfte führen dazu, daß die Wellen-Gleichungen für transversale und longitudinale Wellen durch entsprechende Terme ergänzt werden müssen. Dadurch kommt es für ebene Wellen nach einer kurzen Laufstrecke 1 zu einer Strahlablenkung $\Delta$, die durch die Formel $\Delta = - \Omega \cdot \dfrac{\ell 2}{2 \cdot v}$ gegeben ist: wobei v die Phasengeschwindigkeit der Ultraschallwelle ist. Über eine Messung der Strahlablenkung $\Delta$ kann also die Winkelgeschwindigkeit $\Omega$ bestimmt werden. Der Ablenkungseffekt ist zwar klein, aber bei nicht zu hohen Forderungen an die Nachweisgrenze ausreichend.

Wirkt auf den Sensor 10 eine Winkelgeschwindigkeit $\Omega$ mit einer parallel zur x-Richtung liegenden Drehachse ein, so wird der Strahl durch die wirkende Corioliskraft in der yz-Ebene abgelenkt. Die beiden Empfänger sind bei einer Winkelgeschwindigkeit von $\Omega = 0$ aufeinander abgeglichen, was bedeutet, daß das Meßsignal der beiden Empfänger 14, 15 gleich groß ist. Bei einer angreifenden Winkelgeschwindigkeit von $\Omega \neq 0$ werden infolge der Ablenkung des Schallstrahls die beiden Empfänger 14, 15 unterschiedlich stark angeregt, der eine stärker und der andere schwächer als bei einer Winkelgeschwindigkeit von $\Omega = 0$. Wird die Differenz der Empfangssignale der beiden Empfänger 14, 15 gebildet, so entsteht ein zur Winkelgeschwindigkeit $\Omega$ proportionales Differenzsignal, das entsprechend dem Verlauf der Winkelgeschwindigkeit $\Omega$ sein Vorzeichen wechselt. Bei Hochfrequenzsignalen bedeutet der Vorzeichenwechsel eine Phasenänderung von 180°. Mit Hilfe von phasenempfindlichen Gleichrichtern wird dann eine zur Winkelgeschwindigkeit $\Omega$ proportionale Gleichspannung erhalten, deren Vorzeichen den Drehsinn angibt.

Um eine hohe Empfindlichkeit, das heißt eine möglichst große Strahlablenkung entsprechend der oben angegebenen Gleichung zu erhalten, kann die Stablänge 1 so groß wie von der Anwendung her zulässig gemacht werden. Aus der gleichen Überlegung wird die Schallgeschwindigkeit v der Ultraschallwelle durch die Verwendung einer Transversalwelle und durch die Auswahl des Materials des Schalleiters 11 möglichst klein gemacht. Bei der Materialauswahl dominiert jedoch die Forderung nach einem möglichst kleinen thermischen Ausdehnungskoeffizienten. Da für die Entstehung eines Differenzsignals nur eine Relativbewegung zwischen dem Strahl und den beiden Empfängern 14, 15 erforderlich ist, führt jede Biegung des Schalleiters 11 in der yz-Ebene zu einer ungewollten Signalerzeugung. Am kritischsten sind die durch Temperaturgradienten parallel zur z-Richtung entstehenden Biegungen des Schalleiters 11, die eine linear vom Ausdehnungskoeffizienten abhängige Relativbewegung erzeugen. Deshalb ist Zerodur, eine Glaskeramik der Firma Schott, Mainz (DE), mit seinem extrem geringen Ausdehnungskoeffizienten für einen stabförmigen Festkörper als Schalleiter 11 das am besten geeignete Material. Der Ausdehnungskoeffizient geht bei 30 °C und 170 °C durch Null, und sein Betrag überschreitet im Arbeitstemperaturbereich nicht den Wert $6 \cdot 10^{-8}$ K$^{-1}$.

Die Verwendung von Flüssigkeiten für den Schalleiter hätte den Vorteil einer kleineren Schallgeschwindigkeit. In der Flüssigkeit können sich jedoch durch Trägheitskräfte und Temperaturgradienten Strömungen ausbilden, die zu undefinierten störenden Ablenkungen des Schallstrahls führen.

Die Breite b des Schalleiters ist so groß zu wählen, daß erstens der Schallstrahl die Seitenflächen praktisch nicht berührt, um die Ablenkung des Schallstrahls nicht zu beeinflussen und Schallreflexion an den Seitenflächen weitgehend zu vermeiden, und zweitens mit den Empfängern 14, 15 die Flanken des Schallamplitudenprofils weitgehend erfaßt werden, um ein möglichst großes Signal zu erhalten. Falls erforderlich, kann an den Seiten zur weiteren Unterdrückung reflektierter Schallwellen auch eine Schallabsorptionsschicht 20 aufgebracht werden. Die Frequenz der Ultraschallwelle wird für eine gute Bündelung des Schallstrahls so groß wie möglich gemacht. Eine Grenze für die Frequenz nach oben ist durch die Schallabsorption im Schallleiter 11 gegeben. Bekanntlich wächst die Absorption mit der Frequenz der Ultraschallwelle. Die Schallabsorption reduziert den durch Reflexion an den Stirn- und Seitenflächen entstehenden vagabundierenden Strahlungsuntergrund (Störsignale) und ist damit erwünscht.

Es gibt eine optimale Schallabsorption, bei der wegen der Reduzierung des Strahlungsuntergrundes bei gleichzeitiger Schwächung des Nutzsignals ein minimaler Signalstörabstand erhalten wird. Die optimale Frequenz liegt etwa im Bereich von 5 bis 10 MHz. Diese hohe Frequenz ermöglicht eine einfache Unterdrückung aller niederfrequenten Störsignale, die sich aus Erschütterungen und Schwingungen des Stabes ergeben können.

Der Sender 12 und die Empfänger 14, 15 sind vom gleichen Typ und weisen alle y-Elektroden auf. Die weite räumliche Trennung der Sender- und Empfangsseite erleichtert die elektrische Entkopplung der Sender- und der Empfangsbereiche. Daß der Sender und die Empfänger vom gleichen Typ sind, hat insbesondere die folgenden Vorteile. Von den durch Erschütterungen und Schwingungen erzeugten mechanischen Störspannungen führt nur die Scherspannungskomponente $y_z$ zu Störladungen auf den y-Elektroden. Der piezoelektrische Koeffizient $d_{15}$, der etwa um den Faktor 3 gegenüber dem Koeffizienten $d_{31}$ größer ist, wird für die Signalbildung nutzbar gemacht. Die durch die Temperaturabhängigkeit des Koeffizienten $d_{15}$ entstehende Empfindlichkeitsänderung wird vollständig kompensiert, wenn durch eine Amplitudenregelung der Schallwelle die Summe der Ausgangssignale der beiden Empfänger 14, 15 stabilisiert wird. Wird nämlich durch die Regelung das Summensignal der Ausgangssignale konstant gehalten, dann wird dadurch bei Temperaturänderung die Schallamplitude so geändert, daß die Empfindlichkeitsänderung durch den Temperaturkoeffizienten des Koeffizienten $d_{15}$ der piezokeramischen Wandler kompensiert wird.

Durch ein nicht dargestelltes Gehäuse aus gut wärmeleitendem Material und eine möglichst symmetrische Wärmeleitung zwischen dem Gehäuse und dem Schalleiter 11 werden die Temperaturgradienten im Schalleiter 11 so niedrig wie möglich gehalten. Dadurch wird ein wesentlicher Beitrag geliefert, die bereits erwähnte Nullpunktschwankung, das heißt im Zustand, wenn keine Winkelgeschwindigkeit $\Omega$ angreift, durch die Stabbiegung hinreichend zu unterdrücken.

In Figur 2 ist dargestellt, wie die bereits oben erwähnte Bündelung des Schallstrahls verbessert werden kann. Dabei wird die Transversalwelle mit einem zylindrischen piezokeramischen Wandler als Sender 12a angeregt. Dieser Wandler 12a fokussiert die Ultraschallwelle auf den Spalt 16 zwischen den beiden Empfängern 14a, 15a.

Die Stirnfläche des Schalleiters 11 ist mit ihrer Krümmung der zylindrischen Senderplatte 12a angepaßt. Ferner kann der Sender 12a auch breiter gemacht werden, so daß das Verhältnis Wandlerbreite zur Wellenlänge etwa gegenüber dem Ausführungsbeispiel nach Figur 1 verdoppelt ist, und damit die Flankensteilheit des Amplitudenprofils der Welle vergrößert wird. Insgesamt wird gegenüber dem Sensor nach der Figur 1 die relative Änderung der Anregungsstärke der beiden Empfänger 14a, 15a infolge einer Ablenkung des Strahls wesentlich erhöht und damit das Signal/Ransch-Verhältnis, das heißt das Verhältnis zwischen Meßsignal und Störsignal, verbessert. Das in der Figur 2 eingetragene Amplitudenprofil 22 dicht vor den beiden Empfängern 14, 15 ergibt sich bei einer Stablänge 1 von 10 cm, einer Breite des Senders 12a von 1,6 cm und einer Ultraschallwellenlänge von 0,5 mm. Die Strahlbreite, gemessen bei einem Abfall der Amplitude auf $A/A_0 = 1/e$ beträgt 0,4 cm. Hierbei bedeutet

A = Amplitude an der Stelle z

$A_0$ = Amplitude bei z = 0; (minimale Amplitude)

e = Basis der natürlichen Logarithmen.

**Patentansprüche**

1. Sensor (10) zur Bestimmung der Winkelgeschwindigkeit ( $\vec{\Omega}$ ) eines vofierenden Mediums, insbesondere von Kraftfahrzeugen, der nach Art eines Schwingungsgyrometers im Ultraschallbereich arbeitet, wobei ein Sender (12) derart ausgebildet ist, daß in ein schalleitendes Medium (11) ein transversaler, gebündelter Ultraschallstrahl abgestrahlt wird, wobei Schallreflexion an den seitlichen Grenzflächen des Mediums (11) weitgehend vermieden wird, und wobei sich auf der dem Sender (12) gegenüberliegenden Grenzfläche des Mediums (11) gemeinsam zur Messung der Ablenkung (Δ) des Ultraschallstrahls mindestens zwei Empfänger (14, 15) befinden, die durch einen schmalen Spalt (16) getrennt sind, so daß beim Angriff einer Winkelgeschwindigkeit ( $\vec{\Omega}$ ) durch die von der Corioliskraft ( $\vec{K}_c$ ) bewirkte Ablenkung (Δ) in den Empfängern (14, 15) unterschiedliche Signale erzeugt werden, so daß durch Differenzbildung der Signale der Empfänger (14, 15) ein zur zu ermittelnden Winkelgeschwindigkeit ( $\vec{\Omega}$ ) proportionales Meßsignal erhalten wird.

2. Sensor nach Anspruch 1, dadurch gekennzeichnet, daß der Spalt (16) zwischen den Empfängern (14, 15) parallel zum Vektor der zu bestimmenden Winkelgeschwindigkeit ( $\vec{\Omega}$ ) liegt.

3. Sensor nach Anspruch 1 und/oder 2, dadurch gekennzeichnet, daß das Medium (11) eine kleine Schallgeschwindigkeit und einen kleinen Ausdehnungskoeffizienten hat.

4. Sensor nach einem der Ansprüche 1 bis 3, dadurch gekennzeichnet, daß das Medium (11) ein Festkörper ist.

5. Sensor nach Anspruch 4, dadurch gekennzeichnet, daß der Festkörper aus dem Material Zerodur besteht.

6. Sensor nach einem der Ansprüche 1 bis 5, dadurch gekennzeichnet, daß die Transversalwelle an einem Ende des Mediums (11) mit einem piezokeramischen Wandler (12) als Sender erregt wird, und daß die polare Achse des Wandlers (12) senkrecht zum Vektor der Winkelgeschwindigkeit ( $\vec{\Omega}$ ) und parallel zu den Stirnflächen des Mediums (11) orientiert ist.

7. Sensor nach einem der Ansprüche 1 bis 6, dadurch gekennzeichnet, daß die Frequenz der Ultraschallwelle im Bereich frequenzabhängiger Schallabsorption so gewählt wird, daß durch die damit bewirkte Reduzierung des Strahlungsuntergrundes aus Mehrfachreflexionen ein maximaler Störabstand erhalten wird.

8. Sensor nach einem der Ansprüche 1 bis 7, dadurch gekennzeichnet, daß die Empfänger (14, 15) piezokeramische Scherschwinger sind.

9. Sensor nach einem der Ansprüche 1 bis 7, dadurch gekennzeichnet, daß die Empfänger (14, 15) und der Sender (12) piezokeramische Scherschwinger vom gleichen Typ und Material sind.

10. Sensor nach einem der Ansprüche 1 bis 9, dadurch gekennzeichnet, daß mit Hilfe einer elektrischen Regelung für die Anregungsspannung des Senders (12) die Summe der Meßsignale der beiden Empfänger (14, 15) konstant gehalten wird.

11. Sensor nach einem der Ansprüche 1 bis 10, dadurch gekennzeichnet, daß die Ultraschallwelle eine transversale Zylinderwelle ist, die auf den Spalt (16) fokussiert ist.

12. Sensor nach Anspruch 11, dadurch gekennzeichnet, daß der Sender ein zylindrischer piezokeramischer Scherschwinger (12a) ist.

**Claims**

1. Sensor (10) for the determination of the angular velocity (Ω) of a rotating medium, especially of motor vehicles, which sensor operates in the manner of an oscillation gyrometer in the ultrasonic range, an emitter (12) being designed in such a manner that a transverse, concentrated ultrasonic wave is injected into a sound conducting medium (11), acoustic reflection at the lateral boundary surfaces of the medium (11) being to a large extent avoided, and at least two receivers (14, 15) being situated on that boundary surface of the medium (11) which is situated opposite the emitter (12) jointly to measure the deflection (Δ) of the ultrasonic beam, which receivers are separated by a narrow gap (16), so that upon the application of an angular velocity (Ω) differing signals are generated, by the deflection (Δ) caused by the Coriolis force ( $\overline{K}_c$ ), in the receivers (14, 15), so that by formation of the difference of the signals of the receivers (14, 15) a measurement signal proportional to the angular velocity ($\Omega$) to be determined is obtained.

2.  Sensor according to Claim 1, characterised in that the gap (16) between the receivers (14, 15) is parallel to the vector of the angular velocity ($\Omega$) to be determined.

3.  Sensor according to Claim 1 and/or 2, characterised in that the medium (11) has a low acoustic velocity and a low coefficient of expansion.

4.  Sensor according to one of Claims 1 to 3, characterised in that the medium (11) is a solid body.

5.  Sensor according to Claim 4, characterised in that the solid body consists of the material Zerodur.

6.  Sensor according to one of Claims 1 to 5, characterised in that the transverse wave is excited at one end of the medium (11) with a piezoceramic transducer (12) as emitter, and in that the polar axis of the transducer (12) is oriented perpendicular to the vector of the angular velocity ($\Omega$) and parallel to the end faces of the medium (11).

7.  Sensor according to one of Claims 1 to 6, characterised in that the frequency of the ultrasonic wave is selected within the range of frequency-dependent acoustic absorption so that a maximum signal-to-noise ratio is obtained by the thus caused reduction of the radiation background arising from multiple reflections.

8.  Sensor according to one of Claims 1 to 7, characterised in that the receivers (14, 15) are piezoceramic shear oscillators.

9.  Sensor according to one of Claims 1 to 7, characterised in that the receivers (14, 15) and the emitter (12) are piezoceramic shear oscillators of the same type and material.

10. Sensor according to one of Claims 1 to 9, characterised in that by means of an electrical regulation for the excitation voltage of the emitter (12) the sum of the measurement signals of the two receivers (14, 15) is maintained constant.

11. Sensor according to one of Claims 1 to 10, characterised in that the ultrasonic wave is a transverse cylindrical wave which is focused onto the gap (16).

12. Sensor according to Claim 11, characterised in that the emitter is a cylindrical piezoceramic shear oscillator (12a).

## Revendications

1.- Capteur (10) pour déterminer la vitesse angulaire $(\vec{\Omega})$ d'un milieu en rotation, notamment de véhicules automobiles, ce capteur fonctionnant à la façon d'un gyromètre oscillant dans le domaine des ultra-sons, capteur dans lequel un émetteur (12) est réalisé de façon qu'un faisceau d'ultra-sons transversal concentré soit émis dans un milieu (11) conducteur du son, tandis que la réflexion sonore sur les surfaces limitrophes latérales du milieu (11) est évitée dans une large mesure, et tandis que sur la surface limitrophe, opposée à l'émetteur (12), du milieu (11) se trouvent en commun au moins deux récepteurs (14, 15) pour mesurer la déviation ($\Delta$) du faisceau d'ultrasons, ces détecteurs étant séparés par une fente étroite (16), de sorte que lors de l'intervention d'une vitesse angulaire $(\vec{\Omega})$ des signaux différents sont produits sur les récepteurs (14, 15) du fait de la déviation ($\Delta$) provoquée par la force de coriolis $(\vec{K_c})$, de sorte qu'un signal de mesure proportionnel à la vitesse angulaire $(\vec{\Omega})$ à déterminer est obtenu en formant la différence des signaux des récepteurs (14, 15).

2.- Capteur selon la revendication 1, caractérisé en ce que la fente (16) entre les récepteurs (14, 15) est parallèle au vecteur de la vitesse angulaire $(\vec{\Omega})$ à déterminer.

3.- Capteur selon la revendication 1 et/ou la revendication 2, caractérisé en ce que le milieu (11) a une faible vitesse du son et un faible coefficient de dilatation.

4.- Capteur selon une des revendications 1 à 3, caractérisé en ce que le milieu (11) est un corps solide.

5.- Capteur selon la revendication 4, caractérisé en ce que le corps solide est constitué par le matériau Zérodur.

6.- Capteur selon l'une des revendications 1 à 5, caractérisé en ce que l'onde transversale est excitée à une extrémité du milieu (11) par un convertisseur piézo-céramique (12) jouant le rôle d'émetteur, et en ce que l'axe polaire du convertisseur (12) est orienté perpendiculairement par rapport au vecteur de la vitesse angulaire $(\vec{\Omega})$ et parallèlement aux faces frontales du milieu (11).

7.- Capteur selon une des revendications 1 à 6, caractérisé en ce que la fréquence de l'onde ultra-sonore dans le domaine de l'absorption sonore dépendant de la fréquence, est choisie de façon que grâce à la réduction ainsi provoquée du fond du rayonnement, à partir de réflexions multiples, un rapport signal-bruit maximal est obtenu.

8.- Capteur selon une des revendications 1 à 7, caractérisé en ce que les récepteurs (14, 15) sont des oscillateurs transversaux piézo-céramiques.

9.- Capteur selon une des revendications 1 à 7, caractérisé en ce que les récepteurs (14, 15) et l'émetteur (12) sont des oscillateurs transversaux piézo-céramiques du même type constitué par le même matériau.

10.- Capteur selon une des revendications 1 à 9, caractérisé en ce qu'à l'aide d'une régulation électrique pour la tension d'excitation de l'émetteur (12), la somme des signaux de mesure des deux récepteurs (14, 15) est maintenue constante.

11.- Capteur selon une des revendications 1 à 10, caractérisé en ce que l'onde ultra-sonore est une onde cylindrique transversale qui est focalisée sur la fente (16).

12.- Capteur selon la revendication 11, caractérisé en ce que l'émetteur est un oscillateur transversal piézo-céramique cylindrique (12a).

# FIG.1

# FIG.2